# EUROPEAN PATENT APPLICATION

(11) **EP 2 522 420 A2**
(43) Date of publication of application: **14.11.2012**
(21) Application number: 12175826.2
(22) Date of filing: 14.03.2008
(51) Int. Cl.: B01D 61/36, B01D 63/06

(54) **Dehydration device, and dehydration system**

(30) Priority: 15.03.2007 JP 2007066285; 27.11.2007 JP 2007305646
(62) Divisional of application: 08722178.4
(71) Applicant: Mitsubishi Heavy Industries, Tokyo 108-8215 (JP)
(72) Inventor: Yukumoto, Atsuhiro, Hiroshima-shi, Hiroshima 733-8553 (JP); Osora, Hiroyuki, Hiroshima-shi, Hiroshima 733-8553 (JP); Seiki, Yoshio, Hiroshima-shi, Hiroshima 733-8553 (JP); Hirayama, Haruaki, Mihara-shi, Hiroshima 729-0393 (JP)
(74) Representative: Intès, Didier Gérard André

(57) **Abstract**

A dehydrating apparatus, a dehydration system, and a dehydration method have improved membrane performance. The dehydrating apparatus 1 includes, in a dehydrating apparatus body, a water separation membrane module 10 in which a water separation membrane having at least one flow path extending in the up and down direction to cause a liquid to pass through is provided with a liquid inlet at the bottom thereof and a liquid outlet at the top thereof; and a shell 11 defined by the outer surface of the water separation membrane module and the inner wall of the dehydrating apparatus body. A heater 12 is provided in the shell near the liquid outlet, and a connection port 14 for connection with a pressure reducing device 13 is provided in the shell near the liquid inlet. As the liquid rises in the water separation membrane, water in the liquid permeates the water separation membrane and moves into the shell, by which the liquid is dehydrated.

## Description

### Technical Field

The present invention relates to a dehydrating apparatus, a dehydration system, and to a dehydration method. More particularly, the present invention relates to a dehydrating apparatus, a dehydration system, and to a dehydration method capable of efficiently dehydrating a mixture of water and ethanol or propanol which is in an azeotropic composition with water, a mixture of water and acid, and the like.

### Background Art

As a fuel source to replace fossil fuels, ethanol has attracted attention, and the market size thereof is predicted to be 55 million kiloliters in the year 2010. However, to use ethanol as a fuel, a crude product obtained from a biological raw material such as corn must be distilled and purified, and this must be dehydrated to at least 99.5 wt%.
Conventionally, in dehydrating, a dilute ethanol aqueous solution has been distilled in a distilling column so as to be concentrated to a point close to the azeotropic point of aqueous ethanol, and then the solution has been dehydrated.

As a method for dehydrating an azeotrope, a method is available in which an entrainer is added to the azeotrope, and dehydration is accomplished by azeotropic distillation. However, the method requires a process in which a three-component azeotrope is distilled, and furthermore, the entrainer must be recovered. Therefore, the method has some drawbacks such as large amount of heat energy being required.

Another method is also available in which a plurality of molecular sieve tanks are arranged in parallel, and dehydration is accomplished while these tanks are switched over in a batch method. The method also has a drawback in that the regeneration of the molecular sieve tanks consumes substantial amount of energy.

Furthermore, there has been known a method in which water is removed from a mixture that is mutually completely soluble by a membrane separation process using the pervaporation method using a membrane separator (Patent Document 1: Japanese Unexamined Patent Application Publication No. 7-124444). The membrane separation process using the pervaporation method has advantageous effects of high separation performance and energy saving in the separation of a liquid mixture that is completely soluble mutually.
Patent Document 1: Japanese Unexamined Patent Application Publication No. 7-124444

### Disclosure of the Invention

### Problems to be Solved by the Invention

The membrane separation process using the pervaporation method is a promising method of purifying ethanol fuel and the like. The improvement of separation performance has been demanded for the purpose of practical use. In particular, it has been required to obtain a high-purity ethanol anhydride with higher efficiency.

### Means for Solving the Problems

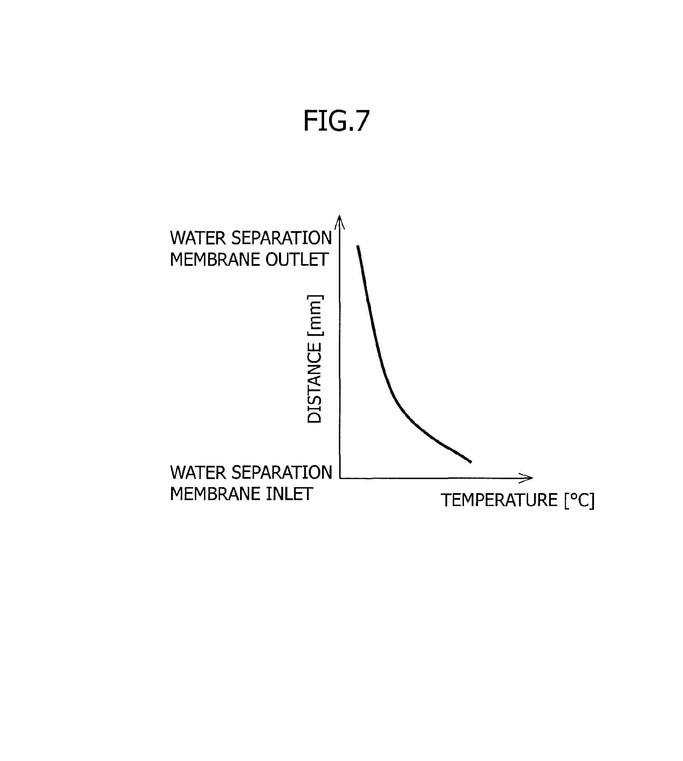

The present inventors discovered that in the membrane separation process using the pervaporation method using a tubular-type or monolith-type water separation membrane reactor, the temperature of a liquid to be treated decreases as the liquid flows from the inlet of the water separation membrane reactor to the outlet thereof. Figure 7 shows the relationship between distance from the inlet of a water separation membrane reactor and temperature. The decrease in liquid temperature leads to a decrease in permeation flux (kg/m²h) which represents the membrane performance of a water separation membrane. That is to say, the present inventors discovered that significant performance degradation of the water separation membrane is seen near the outlet, which is the latter part of water separation membrane reactor, and they thereby completed the present invention.

To solve the above problems, the present invention provides a dehydrating apparatus comprising, in a dehydrating apparatus body, a water separation membrane module in which a water separation membrane having at least one flow path extending in the up and down direction to cause a liquid to pass through is provided with a liquid inlet at the bottom thereof and a liquid outlet at the top thereof; and a shell defined by the outer surface of the water separation membrane module and the inner wall of the dehydrating apparatus body, wherein a heater is provided in the shell near the liquid outlet, and a connection port for connection with a pressure reducing device is provided in the shell near the liquid inlet; and as the liquid rises in the water separation membrane, water in the liquid permeates the water separation membrane and moves into the shell, by which the liquid is dehydrated.

In another embodiment, the dehydrating apparatus in accordance with the present invention may have a further feature that an inert gas inlet is further provided in the shell near the liquid outlet.

The present invention may further provide a dehydrating apparatus comprising, in a dehydrating apparatus body, a water separation membrane module in which a water separation membrane having at least one flow path extending in the up and down direction to cause a liquid to pass through is provided with a liquid inlet at the bottom thereof and a liquid outlet at the top thereof; and a shell defined by the outer surface of the water separation membrane module and the inner wall of the dehydrating apparatus body, wherein an inert gas inlet is provided in the shell near the liquid outlet, and an inert gas outlet is provided in the shell near the liquid inlet.

The present invention may further provide a dehydrating apparatus comprising, in a dehydrating apparatus body, a water separation membrane module in which a water separation membrane having at least one flow path extending in the up and down direction to cause a liquid to pass through is provided with a liquid inlet at the bottom thereof and a liquid outlet at the top thereof; and a shell defined by the outer surface of the water separation membrane module and the inner wall of the dehydrating apparatus body, wherein at least one heater is provided in the water separation membrane, and a connection port for connection with a pressure reducing device is provided in the shell near the liquid inlet; and as the liquid rises in the water separation membrane, water in the liquid permeates the water separation membrane and moves into the shell, by which the liquid is dehydrated.

The present invention may further provide a dehydrating apparatus comprising, in a dehydrating apparatus body, a water separation membrane module in which a water separation membrane having at least one flow path extending in the up and down direction to cause a liquid to pass through is provided with a liquid inlet at the bottom thereof and a liquid outlet at the top thereof; and a shell defined by the outer surface of the water separation membrane module and the inner wall of the dehydrating apparatus body, wherein at least one heater is provided in the water separation membrane, an inert gas inlet is provided in the shell near the liquid outlet, and an inert gas outlet is provided in the shell near the liquid inlet.

In another embodiment, the dehydrating apparatus in accordance with the present invention may have a further feature that a heater is further provided in the shell near the liquid outlet.

In still another embodiment, the dehydrating apparatus in accordance with the present invention may have a further feature of being of a series treatment type in which at least two water separation membrane modules are arranged in parallel in the dehydrating apparatus body, and the liquid outlet of one water separation membrane module is connected to the liquid inlet of another water separation membrane module.

In yet another aspect, the dehydrating apparatus in accordance with the present invention may have a further feature that a baffleplate is provided in the shell.

As another aspect, the present invention may provide a dehydration system comprising the dehydrating apparatus according to any one of claims 1 to 8; a liquid heater provided upstream of the dehydrating apparatus; and a pressure reducing means connected as necessary to the shell near the liquid outlet of the dehydrating apparatus.

In another modification, the dehydration system in accordance with the present invention may further comprise a liquid concentration measuring device provided downstream of the dehydrating apparatus.

In still another mode, the dehydration system in accordance with the present invention may further comprise a liquid flow regulator which is provided upstream of the dehydrating apparatus, and is connected to the liquid concentration measuring device.

In yet another mode, the dehydration system in accordance with the present invention may have further features that the dehydrating apparatus comprises at least two water separation membrane modules connected in parallel; at least two dehydrating apparatuses are connected in series; and a mixer for mixing a liquid recovered by the dehydrating apparatus is provided in a pipe connecting the two dehydrating apparatuses connected in series.

As still another aspect, the present invention may provide a dehydration method in which a liquid is caused to flow from a bottom inlet of a water separation membrane, which has at least one flow path extending in the up and down direction to cause the liquid to pass through, toward a top outlet; and the pressure of the outside of the water separation membrane is reduced to cause water in the liquid to permeate the water separation membrane, wherein on the outside of the water separation membrane, a part near the top outlet of the water separation membrane is heated, and a part near the bottom inlet thereof is depressurized, by which heat convection from the upper part to the lower part is generated on the outside of the water separation membrane.

In another mode, the dehydration method in accordance with the present invention may have a further feature that on the outside of the water separation membrane, a heated inert gas is caused to flow from the upper part to the lower part.

The present invention may provide a dehydration method in which a liquid is caused to flow from a bottom inlet of a water separation membrane, which has at least one flow path extending in the up and down direction to cause the liquid to pass through, toward a top outlet; and the pressure of the outside of the water separation membrane is reduced to cause water in the liquid to permeate the water separation membrane, wherein on the outside of the water separation membrane, a heated inert gas is caused to flow from the upper part to the lower part to generate convection flow from the upper part to the lower part on the outside of the water separation membrane.

The present invention may provide a dehydration method in which a liquid is caused to flow from a bottom inlet of a water separation membrane, which has at least one flow path extending in the up and down direction to cause the liquid to pass through, toward a top outlet; and the pressure of the outside of the water separation membrane is reduced to cause water in the liquid to permeate the water separation membrane, wherein on the inside of the water separation membrane, the water separation membrane is heated; and a part near the bottom inlet of the water separation membrane is depressurized, by which heat convection from the upper part to the lower part is generated on the outside of the water separation membrane.

In another modification, the dehydration method in accordance with the present invention may further comprise the steps of measuring the concentration of anhydride or water in the liquid; and regulating the amount of liquid fed to the water separation membrane depending on the concentration.

In still another modification, the dehydration method in accordance with the present invention may further comprise the steps of dehydrating the liquid using at least two water separation membranes arranged in parallel; mixing the liquid recovered from each of the water separation membranes; and further dehydrating the mixed liquid using a further water separation membrane.

### Advantageous effects of the Invention

According to the present invention, there are provided a dehydrating apparatus, a dehydration system, and a dehydration method in which by preventing the decrease in liquid temperature at the latter part of the water separation membrane module, the membrane separation performance at the latter part of the water separation membrane module is increased, and high dehydration performance is achieved as a whole.

### Brief Description of the Drawings

Figure 1 is a schematic view for explaining one embodiment of a dehydrating apparatus in accordance with the present invention;
Figure 2 is a schematic view for explaining another embodiment of a dehydrating apparatus in accordance with the present invention;
Figure 3 is a schematic view for explaining still another embodiment of a dehydrating apparatus in accordance with the present invention;
Figure 4 is a schematic view for explaining yet another embodiment of a dehydrating apparatus in accordance with the present invention;
Figure 5 is a schematic view for explaining one embodiment of a dehydration system in accordance with the present invention;
Figure 6 is a schematic view for explaining another embodiment of a dehydration system in accordance with the present invention;
Figure 7 is a graph showing temperature distribution of a liquid from the inlet of a water separation membrane to the outlet thereof;
Figure 8 is a schematic view for explaining one embodiment of a water separation membrane module in accordance with the present invention;
Figure 9 is a schematic view for explaining another embodiment of a water separation membrane module in accordance with the present invention;
Figure 10 is a schematic view for explaining yet another embodiment of a dehydrating apparatus in accordance with the present invention;
Figure 11 is a schematic view for explaining still another embodiment of a water separation membrane module in accordance with the present invention;
Figure 12 is a schematic view for explaining yet another embodiment of a water separation membrane module in accordance with the present invention; and
Figure 13 is a schematic view for explaining yet another embodiment of a water separation membrane module in accordance with the present invention.

### Description of Symbols

- 1, 101, 201, 301, 401 ...: dehydrating apparatus
- 2 ...: concentration measuring device
- 3 ...: flow regulator
- 4 ...: valve
- 5 ...: mixer
- 10, 110, 210, 310, 410, 510 ...: water separation membrane module
- 10a, 110a, 210a, 310a, 410a, 510a ...: liquid inlet
- 10b, 110b, 210b, 310b, 410b, 510b ...: liquid outlet
- 10c, 110c, 210c, 310c, 410c, 510c ...: now path
- 10d, 110d, 210d, 310d, 410d, 510d ...: water separation membrane
- 11 ...: shell
- 12 ...: heater
- 13 ...: pressure reducing device
- 14 ...: duct
- 15 ...: inert gas inlet
- 16 ...: inert gas supplier
- 17 ...: pipe
- 18 ...: baffleplate
- 19 ...: heat exchanger
- 20 ...: heater
- 21 ...: heater body
- 50 ...: liquid
- 51 ...: water vapor
- 52 ...: inert gas

### Best Mode for Carrying Out the Invention

A dehydrating apparatus, a dehydration system, and a dehydration method in accordance with the present invention will now be described in more detail with reference to embodiments thereof.

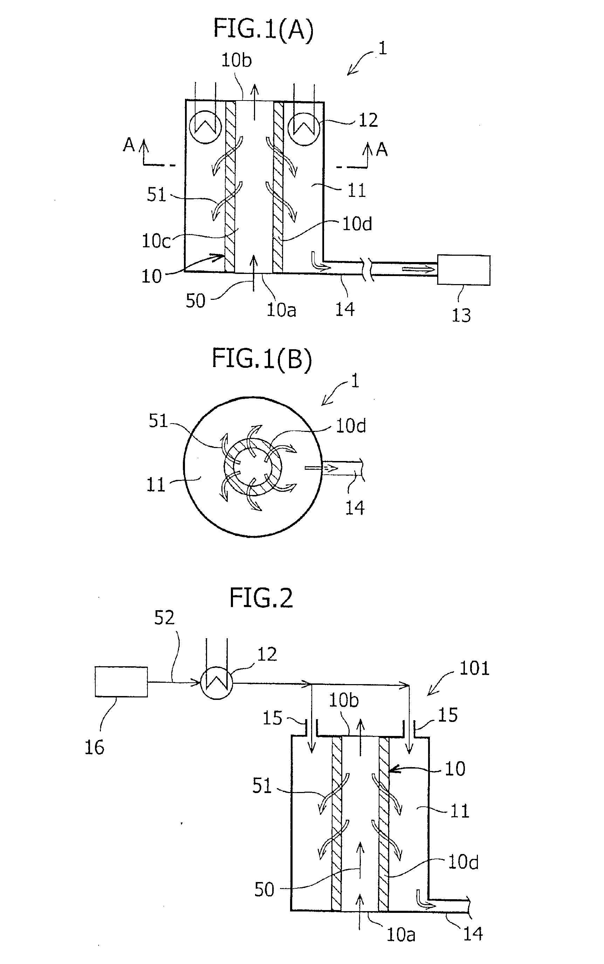

Figure 1 shows one embodiment of the dehydrating apparatus in accordance with the present invention.
The dehydrating apparatus 1 shown in Figure 1 includes a water separation membrane module 10, a shell 11, a heater 12, and a vacuum duct 14, which are provided in a dehydrating apparatus body as major components. The dehydrating apparatus body is connected with a pressure reducing device 13.

Figure 1A is a schematic view of the dehydrating apparatus 1 in accordance with the present invention, and Figure 1B is a sectional view taken along the line A-A of Figure 1A. The water separation membrane module 10 consists of a water separation membrane 10d. and is provided with a liquid inlet 10a at the lower end thereof and a liquid outlet 10b at the upper end thereof. In the water separation membrane module 10, one or more hollow portions extending in the up and down direction to allow a liquid to pass through are formed as flow paths 10c for the liquid. The shell 11 is located around the side surface of the water separation membrane module 10. In an upper part in the shell 11 near the liquid outlet 10b, the heater 12 is provided. On the other hand, in a lower part in the shell 11 near the liquid inlet 10a, the vacuum duct 14 is provided. The vacuum duct 14 is connected to the pressure reducing device 13.

The water separation membrane module 10 separates the liquid into anhydride and water. As such a water separation membrane module, various types have been known and are commercially available. As the water separation membrane module of the present embodiment, a monolith-type or tubular-type water separation membrane module can be used as one example.

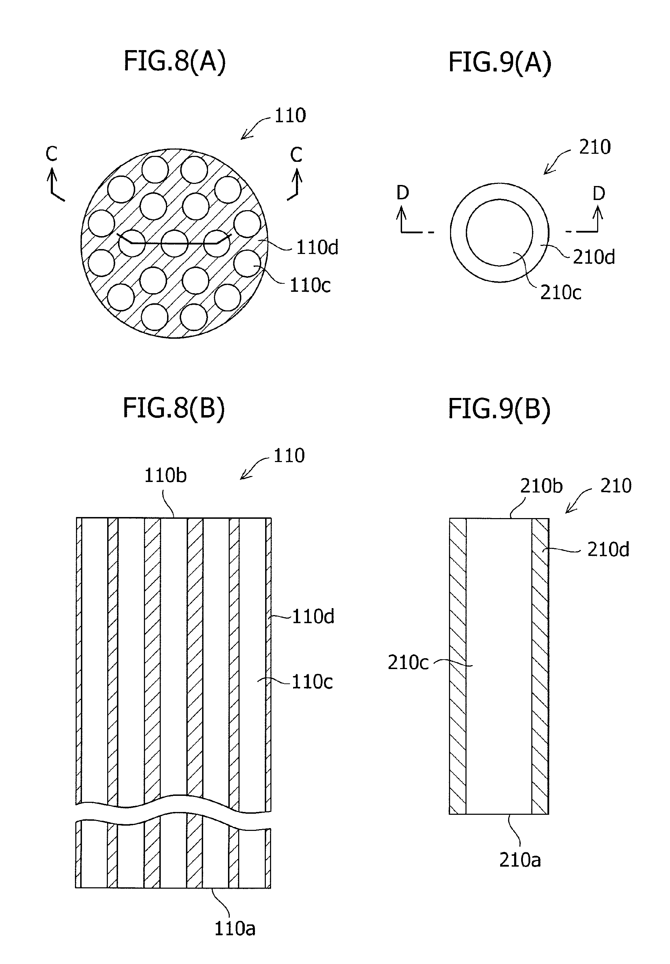

A monolith-type water separation membrane module 110 shown Figures 8A and 8B is explained as one example. Figure 8B is a sectional view taken along the line C-C of Figure 8A. In the monolith-type water separation membrane module 110, a plurality of liquid flow paths 110c, which are one or more hollow portions extending in the up and down direction to allow a liquid to pass through, are provided in a columnar water separation membrane 110d. Usually, in the water separation membrane of this type, the liquid flow path 110c in the water separation membrane is called a primary side or a feed side of the membrane, and the outside of the water separation membrane 110d is called a secondary side or a permeate side of the membrane.

In the membrane separation process using the pervaporation method using a water separation membrane module, the water separation membrane module 110 is preferably placed so that the direction of the flow path is parallel with the vertical direction. The liquid is fed to the module from an inlet 110a on the lower side in the vertical direction while the pressure on the permeate side of the water separation membrane module 110 is reduced. The liquid flows in the direction reverse to gravity, and is discharged from an outlet 110b on the upper side in the vertical direction. By this procedure, water contained in the liquid is converted into water vapor, and the water vapor is drawn out to the permeate side through the side surface of the columnar water separation membrane 110d. As a result, the liquid recovered from the outlet 110b of the water separation membrane module is dehydrated.

The Figures of the monolith-type water separation membrane module 110 shown in Figures 8A and 8B are schematic views. As one example, a water separation membrane module provided with thirty holes, each having a diameter of 3 mm in a columnar water separation membrane having a diameter of 30 mm, can be used. As another example, a water separation membrane module provided with two hundred holes, each having a diameter of 2 mm in a columnar water separation membrane having a diameter of 150 to 200 mm, can be used. The length of the water separation membrane module can be determined appropriately by one skilled in the art depending on the desired membrane performance. As one example, a water separation membrane module having a length ranging from 150 mm to I m can be used.

As another example, a tubular-type water separation membrane module 210 shown in Figures 9A and 9B is explained. Figure 9B is a sectional view taken along the line D-D of Figure 9A. The tubular-type water separation membrane module 210 is a tubular water separation membrane 210d provided with only one liquid flow path 210c therein. The tubular-type water separation membrane module 210 has the same installation mode and operational advantageous effects as those of the monolith-type water separation membrane module. As one example, a tubular-type water separation membrane module having an outer diameter of 10 mm and an inner diameter of 7 mm can be used. As another example, a tubular-type water separation membrane module having an outer diameter of 30 mm and an inner diameter of 22 mm can be used. Regarding the length, as one example, a tubular-type water separation membrane module having a length ranging from 150 mm to 1 m can be used.

As the water separation membrane constituting the water separation membrane module, an inorganic porous membrane in which a nano-order or smaller pore diameter is controlled precisely can be used. The porous membrane having fine pores achieves a molecule sieving effect of allowing small-molecule gases to pass through and excluding large-molecule gases, and exhibits a behavior of activated diffusion in which the permeability coefficient thereof increases with an increase in temperature. An example of a porous membrane having fine pores may include a carbon membrane, silica membrane, and zeolite membrane. In the present embodiment, as the water separation membrane, a silica- or zeolite-based inorganic water separation membrane having 10-angstrom or smaller fine pores may be suitable.

The inorganic water separation membrane described in Japanese Patent No. 2808479 can also be applied to the present embodiment. The inorganic water separation membrane described in Japanese Patent No. 2808479 is an acid-resistant composite separation membrane obtained by supporting silica gel, which is obtained by hydrolysis of alkoxysilane having an ethoxy group or methoxy group, in the fine pores of an inorganic porous body.

The shape, size, and material of the water separation membrane module can be selected appropriately by one skilled in the art depending on the intended purpose of use.

The shell 11 is located on the permeate side of the water separation membrane at the periphery of the water separation membrane module. The shell 11 serves as a flow path for water vapor 51 released through the side surface of the water separation membrane 10. In the present embodiment, the shell 11 is a space defined by the side surface of the water separation membrane module 10 and the inner wall of the dehydrating apparatus body. The shell 11 is configured so that the liquid, before being fed to the water separation membrane module 10 or a liquid 50 recovered from the water separation membrane module 10, does not flow into the shell 11.

At a place near the liquid outlet 10b of the water separation membrane module 10 in an upper part in the shell 11, the heater 12 is provided. The phrase "a part near the liquid outlet 10b" means a place that is close to the liquid outlet 10b of the water separation membrane module 10 to a degree such that the liquid passing through the liquid outlet 10b of the water separation membrane module 10 can be heated to a desired temperature. The heater 12 is preferably provided at the periphery near the liquid outlet 10b, and may be provided in part. The heater 12 heats the liquid near the liquid outlet 10b of the water separation membrane module 10 and the water vapor 51 released through the water separation membrane module 10 into the shell 11. As the heater 12, a conventional heater such as an electric heater or a steam heater can be used. The heater 12 may be of a type capable of heating the liquid 50 flowing in the water separation membrane module 10 to a temperature that does not reach the azeotropic point but is close to the azeotropic point, or is capable of heating a mixture of acetic acid etc. that does not have the azeotropic point and water to a temperature of 100 to 150°C.

At a place near the liquid inlet 10a of the water separation membrane module 10 in a lower part of the shell 11, the vacuum duct 14 is provided. The vacuum duct 14 serves as a connection port for connection with the pressure reducing device 13. From the vacuum duct 14, the water vapor 51 released from the module into the shell 11 is recovered. The vacuum duct 14 may be provided horizontally, or may be provided downward in the vertical direction. Although the direction of the vacuum duct 14 is not subject to any restriction, the vacuum duct 14 is preferably provided at a place distant from the heater 12 on the bottom of the shell 11. This is because heat is circulated by convection flow to the bottom of the shell 11. Also, the vacuum duct 14 may not be provided in plural numbers, and only one vacuum duct 14 is preferably provided. This is because the convection flow of the water vapor 51 and heat in one direction from the heater 12 to the vacuum duct 14 is formed. However, a plurality of vacuum ducts 14 can be provided if the positions and orientations of the vacuum ducts 14 substantially allow the convection flow of the water vapor 51 and heat in one direction to be formed.

The pressure reducing device 13 is a means for reducing the pressure of the shell 11 to aspirate the water vapor released from the water separation membrane module 10. The pressure reducing device 13 may be a pressure reducing device capable of reducing the pressure to about 10 to 100 Torr (1333.22 to 13332.2 Pa). As the pressure reducing device 13, an ordinary pressure-reducing pump or the like can be used.

Next, one mode of a method for dehydrating a liquid by using the dehydrating apparatus 1 of the present embodiment is explained. The liquid to be dehydrated by the dehydrating apparatus 1 of the present embodiment is generally a mixture of a liquid soluble mutually with water and water. Specifically, such liquid to be dehydrated includes a mixture of ethanol and water, a mixture of propanol and water, and a mixture of an acid such as acetic acid and water. According to the method of the present embodiment, these mixtures may be dehydrated, for example, to 99.7% anhydride suitable for fuel application, or to 99.99% or higher purity for the use for cleaning semiconductor substrates. The liquid to be dehydrated may contain alcohol or acid with a concentration of 80 to 95 wt%. Such concentrations are attained by treating a raw material mixture by using a distilling column or an alcohol selective transmission membrane. The liquid to be dehydrated may be a pressurized liquid. The temperature of the pressurized liquid can be raised without gasifying the liquid supplied to the dehydrating apparatus 1 of the present embodiment. In this case, a liquid pressurized to, for example, 1.5 to 10 atm, preferably 2 to 3 atm can be used. Hereinafter, the dehydration method is explained by taking a mixture of ethanol useful as a fuel and water as one example of liquid. The concentration of ethanol in the liquid supplied to the dehydrating apparatus of the present embodiment is preferably 95 wt%.

As shown in Figure 1, the liquid 50, which is a mixture of 95 wt% ethanol and 5 wt% water, is heated by a heat exchanger, and then is fed from the liquid inlet 10a of the water separation membrane module 10. The flow rate of the liquid 50 supplied to the water separation membrane module 10 is preferably 0.5 to 1 m/sec. However, the feed flow rate can be determined appropriately by one skilled in the art depending on the intended permeation flux. The temperature of the liquid 50 at the time of being fed is preferably 70°C to a temperature lower than 80°C. The preferable temperature is close to the azeotropic point of ethanol and water but is lower than the azeotropic point (about 80°C). The reason for this is that as the temperature of the liquid 50 increases, the permeation flux increases and therefore the membrane performance increases, but at a temperature higher than the azeotropic point, part of the liquid 50 vaporizes, and the latent heat of vaporization is released from the liquid.

The liquid 50 is fed to the water separation membrane module 10, while reducing the pressure of the shell 11. The pressure in the shell 11 is preferably reduced to about 10 to 100 Torr (1333.22 to 13332.2 Pa). This is because the permeation is accelerated by a differential pressure between the feed side and the permeate side of water separation membrane. The pressure is reduced by the vacuum duct 14 provided in the bottom of the shell 11. In the upper part of the shell 11, a part of the water separation membrane module 10 near the liquid outlet 10b is heated by the heater 12. It is preferable that the liquid 50 be heated to a temperature that is close to the azeotropic point but is lower than the azeotropic point. Speeifically, the liquid 50 is preferably heated so that the temperature thereof becomes 70°C to a temperature lower than 80°C.

The liquid 50 flows in the flow path 10c upward from the bottom to the top of the water separation membrane module 10. During this time, water contained in the liquid 50 is taken out to the shell 11 as the water vapor 51 via the water separation membrane 10d. By the vaporization of water, the vaporization heat is released from the liquid 51 at all times. However, since a part of the water separation membrane module 10 near the liquid outlet 10b is heated, the temperature of the liquid 51 is maintained without decreasing. Therefore, for the liquid 50 recovered from the liquid outlet 10b, the temperature is almost the same as that of the liquid fed to the module. The concentration of contained water of the recovered liquid 50 is decreased.

The water vapor 51 released to the shell 11 is circulated by convection flow f from the top to the bottom of the shell 11. This is because the upper part of the shell 11 is heated, and at the same time, the pressure is reduced from the lower part of the shell 11. As shown in Figure 1B, the water vapor 51 heats the liquid 50 in the flow path 10c via the water separation membrane 10d while being circulated by convection flow toward the vacuum duct 14. The water vapor 51 is recovered from the vacuum duct 14 provided at the lower part of the shell 11. The recovered water vapor 51 is condensed by a cooler such as a heat exchanger downstream of the dehydration apparatus. Figure 1 exemplifies an embodiment in which two heaters 12 are provided. However, if one heater is provided at a position farthest from the duct 14, that is, at a position at the upper left of the shell 11 in Figure 1A, heat is circulated by convection flow to the duct 14 at the lower right of the shell 11 in Figure 1A.

In the present embodiment, an embodiment of the dehydrating apparatus 1 provided with one water separation membrane module 10 is shown for ease of explanation. However, the dehydrating apparatus in accordance with the present invention may be provided with a plurality of water separation membrane modules, which are connected in parallel, in the dehydrating apparatus body. In this case, the plurality of water separation membrane modules is arranged in parallel in the dehydrating apparatus body. That is to say, plural liquid inlets 10a of the water separation membrane modules are positioned at almost the same height in the apparatus body, and similarly, plural liquid outlets 10b of the water separation membrane modules are positioned at almost the same height. The heater can be provided at such a position and in such a manner that each of the water separation membrane modules near the liquid outlet can be heated to the same temperature. In the present embodiment as well, the shell 11 is one continuous space defined by the inner wall of the dehydrating apparatus body and the outer surfaces of the plurality of water separation membrane modules 10. In the shell 11, heat and water vapor can be circulated by convection flow from the top to the bottom of the space. By providing the plurality of water separation membrane modules, which are connected in parallel, in the dehydrating apparatus body, the quantity of liquid treated at a time by one dehydrating apparatus can be increased.

According to the method of the present embodiment shown in Figure 1, by heating the liquid flowing near the liquid outlet 10b of the water separation membrane module 10, the membrane performance can be enhanced.
It is known that the membrane performance can be evaluated by the permeation flux, and the permeation flux is proportional to the temperature. For the water separation membrane favorably used in the present embodiment, when the temperature of a liquid is increased from about =10°C to about 80°C, the permeation flux increases by a factor of about three. By keeping the liquid at a temperature of 70 to 80°C in any part in the water separation membrane module 10, a high permeation flux can be achieved, and thereby the membrane performance can be enhanced. Specifically, as compared with the conventional art, the permeation flux can be increased by about 50%. Dehydration can be accomplished to a degree such that the concentration of ethanol in the recovered liquid becomes 99.7 wt%, that is, a suitable concentration for a fuel.

Figure 2 shows another embodiment of the dehydrating apparatus in accordance with the present invention.
In the present embodiment, in the upper part of the shell 11, inert gas inlets 15 are provided, and a heater is not provided. In the lower part of the shell 11, the exhaust duct 14, which serves as an inert gas outlet, is provided, and the pressure reducing device is not connected to the exhaust duct 14. Other components of the dehydrating apparatus are the same as the component of the embodiment explained with reference to Figure 1. The components to which the same symbols as those in Figure 1 are applied have the same configuration and operation as those of the component of the embodiment explained with reference to Figure 1.

In the method for dehydrating a mixture of ethanol and water using a dehydrating apparatus 101 of the present embodiment, an inert gas 52 is supplied from the inert gas inlets 15. As the inert gas 52, nitrogen or argon can be used, as an example. The flow rate of the supplied inert gas 52 is preferably, for example, 5 to 15 m/sec. However, the flow rate can be determined appropriately by one skilled in the art depending on the intended volume of the shell 11. The inert gas 52 may be heated by a heater 19 provided on the outside of the dehydrating apparatus 101. The temperature of the inert gas 52 may be a temperature capable of increasing the liquid temperature near the liquid outlet 10b to 70°C to a temperature lower than 80°C.

The inert gas 52 supplied to the shell 11 at a high temperature heats the liquid 50, which flows in a part near the liquid outlet 10b, from the outside of the water separation membrane 10d. The inert gas 52 flows from the top to the bottom of the shell 11, and is recovered from the exhaust duct 14. At this time, the convection flow of the inert gas 52 and heat directed from the top to the bottom of the shell 11 is generated. The water vapor 51 released from the water separation membrane 10d is recovered from the exhaust duct 14 together with the inert gas 52 by this convection flow.

As a modified embodiment of the dehydrating apparatus in accordance with the present invention shown in Figure 2, the heaters for the inert gas 52 can also be provided in the upper part of the shell 11 in the dehydrating apparatus body, not on the outside of the dehydrating apparatus body.

As another modified embodiment of the dehydrating apparatus in accordance with the present invention shown in Figure 2, the dehydrating apparatus 101 can be configured so that a heater is further provided in the upper part of the shell 11 in the dehydrating apparatus body, and a pressure reducing device is connected to a duct. In the dehydration method using the dehydrating apparatus, the inert gas 52 is supplied to the shell 11 from the inert gas inlets 15. At this time, the flow rate of the inert gas 52 is preferably, for example, 0.1 to 5 m/sec, more preferably 0.1 to 1 m/sec. Simultaneously, the pressure of the shell 11 is reduced by the pressure reducing device. The pressure of the shell 11 is preferably reduced to about 10 to 100 Torr (1333.22 to 13332.2 Pa).

According to the dehydrating apparatus in accordance with the present invention shown in Figure 2 and the modifications thereof, by supplying the inert gas 52 to the shell 11, the convection flow of the inert gas 52 and the water vapor 51 and the convection flow of heat directed from the top to the bottom of the shell 11 are generated, and the liquid 50 can be heated in a part near the liquid outlet 10b of the water separation membrane module 10. Therefore, the same effect as that of the embodiment shown in Figure 1 can be achieved.

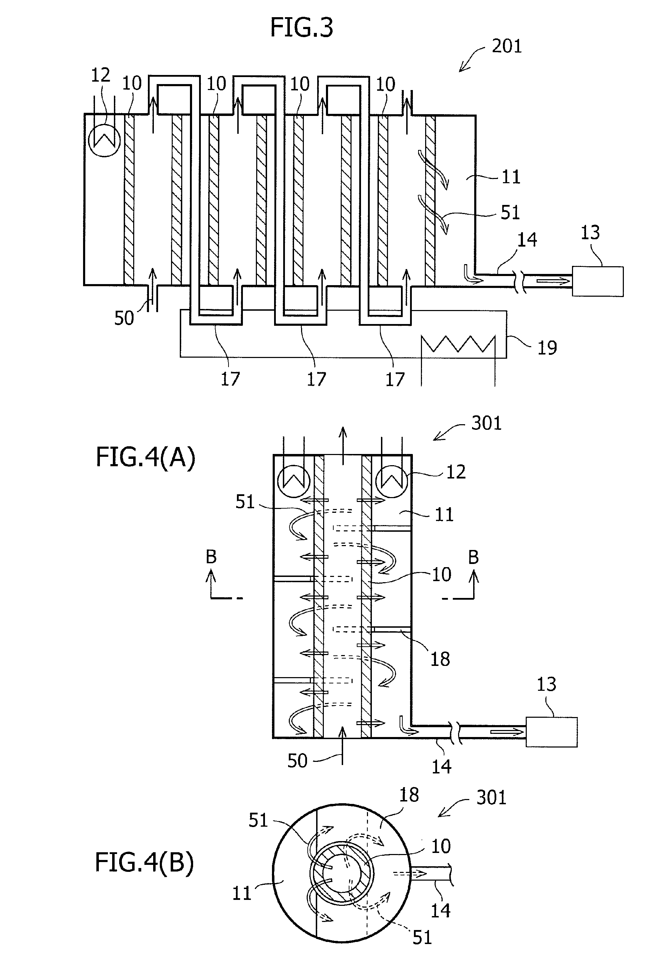

Figure 3 shows still another embodiment of the dehydrating apparatus in accordance with the present invention.
In the present embodiment, a dehydrating apparatus 201 is a tandem type in which the plurality of water separation membrane modules 10 are arranged in parallel in a dehydrating apparatus body, and the liquid outlet 10b of one water separation membrane module 10 and the liquid inlet 10a of another water separation membrane module 10 are connected in series by a pipe 17. By disposing the plurality of water separation membrane modules 10 in parallel in the dehydrating apparatus body, all of the liquid inlets 10a of the water separation membrane modules 10 are positioned at almost the same height at the bottom of the dehydrating apparatus 201, and the liquid outlets 10b thereof are positioned at almost the same height at the top of the dehydrating apparatus 201. Therefore, the duct 14 is positioned in the shell 11 near the liquid inlet 10a of each water separation membrane module 10, and the heater 12 is positioned in the shell 11 near the liquid outlet 10b of each water separation membrane module 10. The number of water separation membrane modules 10 connected in series can be made, for example, three to five. However, the number of water separation membrane modules 10 to be connected can be determined appropriately by one skilled in the art depending on the intended specifications and performance of the water separation membrane modules 10 and the desired purity of the liquid being treated.

The pipe 17 located upstream of each of the water separation membrane modules 10 is preferably provided with a heat exchanger 19. Since the plurality of water separation membrane modules 10 are arranged in the positional relation shown in Figure 3, only one heat exchanger 19 is provided on the outside of the dehydrating apparatus body so that the plurality of pipes 17 can be heated together.

In the method for dehydrating a mixture of ethanol and water using the dehydrating apparatus 201 of the present embodiment, the liquid 50 recovered from the liquid outlet 10b of one water separation membrane module 10 is supplied to the liquid inlet 10a of another water separation membrane module 10, and then is supplied to the liquid inlet 10a of still another water separation membrane module 10. The liquid 50 recovered from each of the water separation membrane modules 10 is preferably prevented from cooling or is heated by the heat exchanger 19 or the like, and then is supplied to the next water separation membrane module 10. The water separation membrane module 10 is heated in a part near the liquid outlet 10b by the heater 12 in the shell 11 as in the embodiment shown in Figure 1. Thereby, the temperature of the liquid 50 flowing in the water separation membrane modules 10 connected in series is kept at a temperature that is close to the azeotropic point of ethanol but is lower than the azeotropic point. Therefore, the same advantageous effects as that of the embodiment shown in Figure 1 can be achieved in the water separation membrane modules 10. Since the plurality of water separation membrane modules 10 are connected in series, high membrane performance is provided as a whole, so that the liquid can be dehydrated to high-purity ethanol.

Figures 4A and 4B show yet another embodiment of the dehydrating apparatus in accordance with the present invention. Figure 4B is a sectional view taken along the line B-B of Figure 4A.
In the present embodiment, as shown in Figure 4A, baffleplates 18 are further provided in the shell 11 of the dehydrating apparatus shown in Figure 1. As the baffleplate 18, an ordinary baffleplate used in a heat exchanger can be used. The number of baffleplates can be varied depending on the scale of the dehydrating apparatus as a matter of design.

In the dehydration method using a dehydrating apparatus 301 of the present embodiment, as shown in Figures 4A and 4B, the water vapor 51 flows in a flow path defined by the baffleplates 18. By providing the baffleplates 18, the flow path of the water vapor 51 flowing in the shell 11 can be lengthened, and the flow rate can be increased. Thereby, the heat transfer amount of the shell 11 can be increased. The water vapor 51 is recovered from the duct 14 while heating the liquid flowing in the water separation membrane module 10 from the shell 11. Thus, the increased amount of heat transfer efficiently heats the liquid 50, so that the membrane performance can be enhanced.

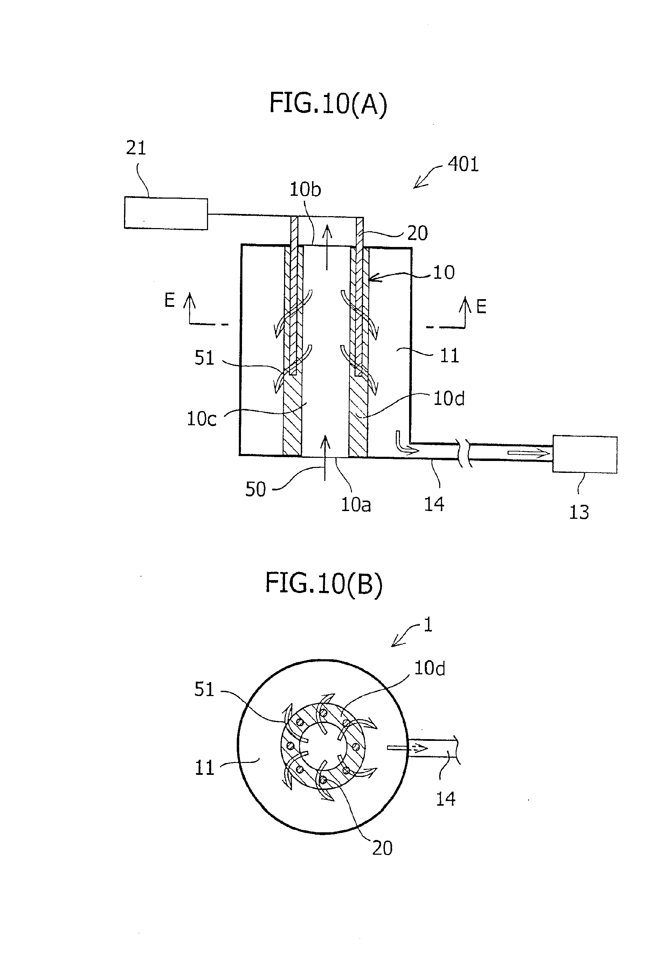

Figures 10A and 10B show yet another embodiment of the dehydrating apparatus in accordance with the present invention. Figure 10B is a sectional view taken along the line E-E of Figure 10A.
In a dehydrating apparatus 401 of the present embodiment, as shown in Figures 10A and 10B, one or more heaters 20 are provided in the direction parallel with the liquid flow path 10c in the water separation membrane module 10. Each of the heaters 20 is connected to a heater body 21 provided on the outside of the dehydrating apparatus body. A heater is not provided in the upper part of the shell 11. Other components are the same as the components of the embodiment explained with reference to Figure 1, and the components to which the same symbols as those in Figure 1 are applied have the same configuration and operation as those of the components of the embodiment explained with reference to Figure 1. The feature of present embodiment is that the heaters 20 are integrated into the water separation membrane module 10.

The heater 20 has a rod shape, and the heater body 21 is a device for heating the heaters 20. The heaters 20 and the heater body 21 constitute a heating device. The heater body 21 is provided on the outside of the dehydrating apparatus 401 or in the shell 11, and is connected with each of the heaters 20. As the heater 20, a conventional heater such as an electric heater or a steam heat exchanger can be used. As the material for the heater 20, iron, copper, or stainless steel can be used. However, the material therefor is not limited to the above-described materials. The material for the heater 20 is preferably a material that does not adversely affect the material of the water separation membrane. Regarding the size of the heater 20, the diameter thereof can be 0.1 to 10 mm, and the length thereof can be 10 mm to 2 m. The number of heaters provided in the water separation membrane module 10 can be one to 2000. However, the number thereof is not limited to the above-described numbers.

The integration position of the heater 20 in the water separation membrane module 10 may be any position at which the liquid flowing in the flow path 10c can be heated to a desired temperature. In Figure 10A, the heater 20 does not extend to the lower end 10a of the water separation membrane module 10. However, the heater 20 may extend to the lower end 10a. The heater 20 may be provided so as to extend from the upper end 10b of the water separation membrane module 10 to a position of half of the total length of the water separation membrane module 10. The heater 20 is preferably provided so as to extend from the upper end 10b of the water separation membrane module 10 to a position of one-third or one-fourth of the total length of the water separation membrane module 10. The material, the size, and the number of heaters 20 can be varied appropriately by one skilled in the art depending on the intended performance and the purpose of use of the water separation membrane module 10.

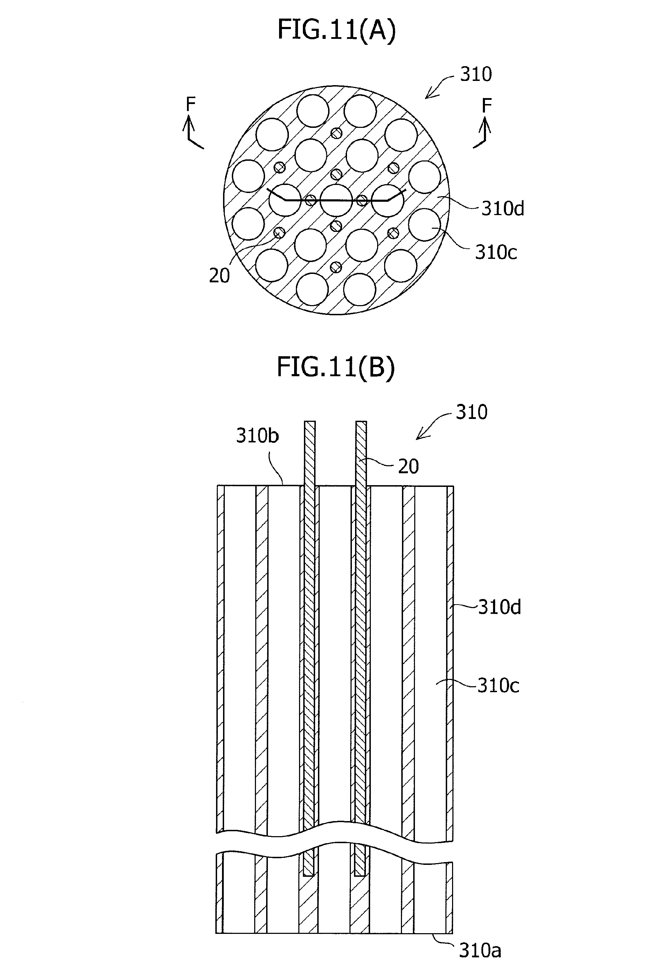

A monolith-type water separation membrane module 310 of the present embodiment shown Figures 11A and 11B is explained as one example. Figure 11A is a plan view, and does not show the heater body 21 and a connecting means between the heater 20 and the heater body 21. Figure 11B is a sectional view taken along the line F-F of Figure 11A. The components to which the same symbols are applied have the same configuration and operation. In the monolith-type water separation membrane module 310 of the present embodiment, the heaters 20 are provided in the direction parallel with liquid flow paths 310c in a water separation membrane 310d of the water separation membrane module 310 as shown in Figure 8. Thereby, the liquid flowing in the liquid flow paths 310c is heated, and therefore high membrane performance can be provided. As one example of the monolith-type water separation membrane module of the present embodiment, like the monolith-type water separation membrane module shown in Figure 8, the water separation membrane module 310 has a diameter of 30 mm and a length of 150 mm, and is provided with thirty holes having a diameter of 3 mm. This water separation membrane module 310 may be provided with three heaters 20 each having a diameter of 3.0 mm and a length of 50 mm, which extend to a position 50 mm below an upper end 310b of the water separation membrane module 310 and are heated to 200°C. However, the configuration of the water separation membrane module 310 is not limited to the above-described configuration.

The water separation membrane module may be that obtained by integrating the heaters 20 in a water separation membrane 320d in the process for manufacturing the water separation membrane module 310.

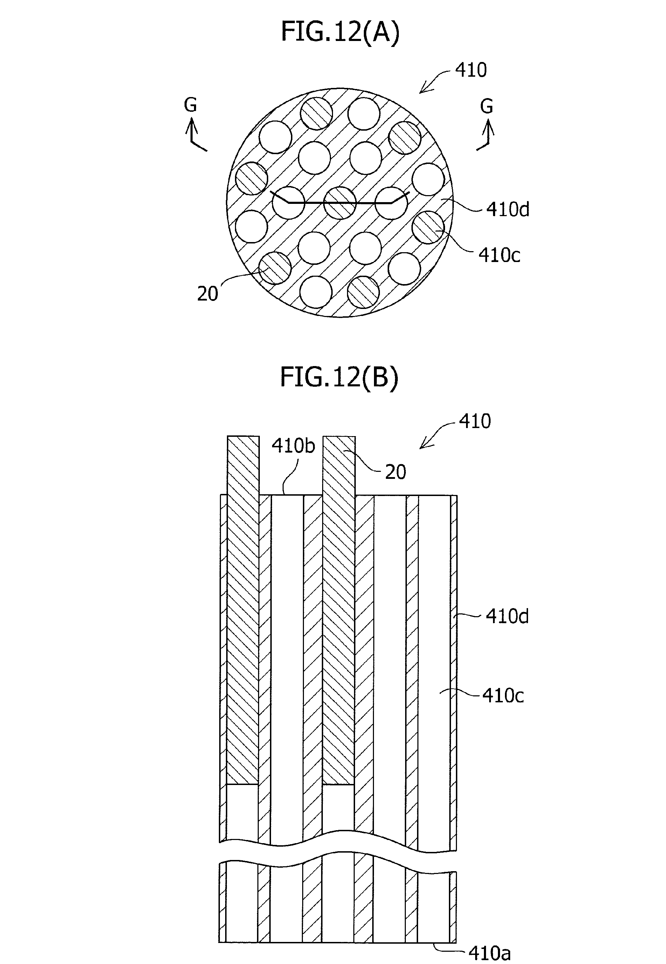

As another example of the monolith-type water separation membrane module of the present embodiment, a water separation membrane module 410 can also be used in which, as shown in Figures 12A and 12B, the heaters 20 are not integrated within a water separation membrane 410d, but are inserted in liquid flow paths 410c. Figure 12B is a sectional view taken along the line G-G of Figure 12A. In the case in which the heaters 20 are inserted in the How paths 410c, the water separation membrane module 410 is configured so that the liquid 50 does not flow into the flow paths 410c in which the heaters 20 are inserted. The diameter of the heater 20 and the diameter of the flow path 410c are not limited to the sizes shown in Figure 12. As far as the heating effect of the present embodiment is achieved, a space may be provided between the heater 20 and the inner wall of the flow path 410c. Specifieally, the space between the heater 20 and the inner wall of the flow path 410c may be 0.1 mm to 2.0 mm. As one example, a water separation membrane module can be used in which the heaters 20 having a diameter of 0.5 mm and a length of 50 mm, which extend to a position 50 mm below an upper end 410b of the water separation membrane module 410 and are heated to 200°C, are provided in nine holes out of thirty holes each having a diameter of 3 mm provided in the water separation membrane module 410 having a diameter of 30 mm and a length of 150 mm like the monolith-type water separation membrane module shown in Figure 8. However, the configuration of the water separation membrane module 410 is not limited to the above-described configuration.

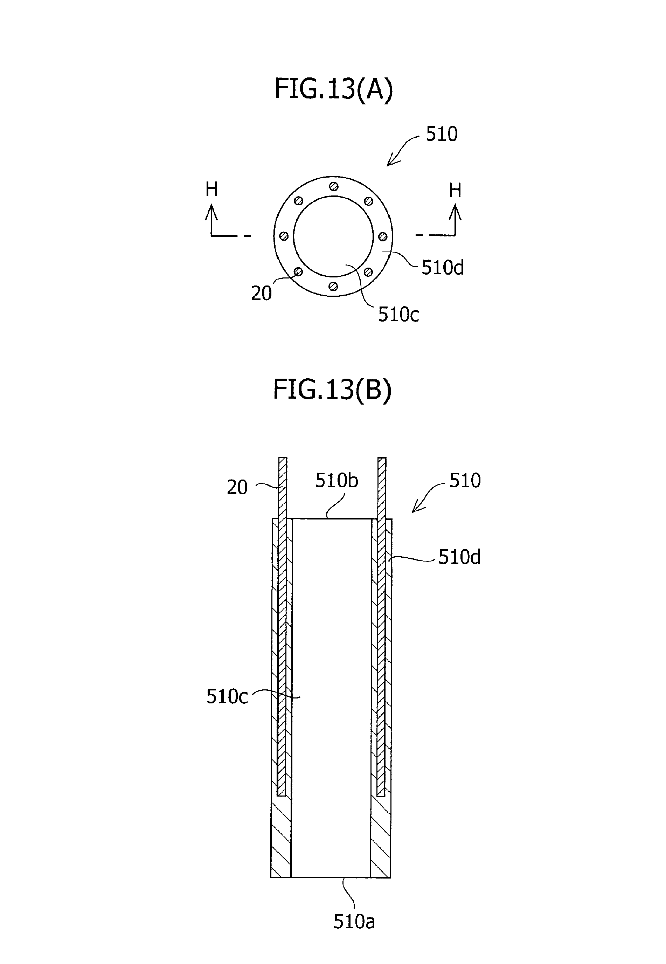

A tubular-type water separation membrane module 510 of the present embodiment shown Figures 13A and 13B is explained as another example. Figure 13B is a sectional view-taken along the line H-H of Figure 13A. For the tubular-type water separation membrane module 510 of the present embodiment, in the water separation membrane 210d of the water separation membrane module 210 shown in Figures 9A and 9B, the heaters 20 are provided in the direction parallel with a liquid flow path 510c. The installation and operational advantageous effect thereof are the same as those of the monolith-type water separation membrane module 310 shown in Figure 11. As one example of the tubular-type water separation membrane module 510 of the present embodiment, the water separation membrane module can be used in which one heater 20 having a diameter of 3.0 mm and a length of 50 mm, which extend to a position 50 mm below an upper end 510b of the water separation membrane module 510 and are heated to 200°C, are provided in a water separation membrane 510d of the water separation membrane module 510 having an outer diameter of 10 mm, an inner diameter of 7 mm, and a length of 150 mm like the tubular-type water separation membrane module shown in Figure 9. However, the configuration of the water separation membrane module 510 is not limited to the above-described configuration.

As the tubular-type water separation membrane module 510 of the present embodiment, a water separation membrane module that is manufactured by the same method as that for the monolith-type water separation membrane module 310 can be used.

In the dehydration method for a mixture of ethanol and water using the dehydrating apparatus 401 of the present embodiment, the heaters 20 provided in the water separation membrane module heat the liquid 50 flowing in the flow paths 10c, via the separating membrane on the inside of the water separation membrane. The heater 20 can heat the liquid 50 to 70°C to a temperature lower than 80°C. Since the liquid 50 is heated from the inside of the membrane module, the liquid 50 is heated efficiently, so that high membrane performance can be provided even at the latter part of the water separation membrane module. Since the water vapor 51 and heat released from the water separation membrane 10d to the shell 11 are aspirated by being depressurized from the lower part of the shell 11, the water vapor 51 and heat are circulated by convection flow from the top to the bottom of the shell 11, and are recovered from the vacuum duct 14. The pressure of the shell 11 is preferably reduced to about 10 to 100 torr (1333.22 to 13332.2 Pa). The dehydrating apparatus 401 of the present embodiment offers an advantageous effect that the liquid 50 can be heated effectively, and therefore the dehydration quantity per unit membrane area increases.

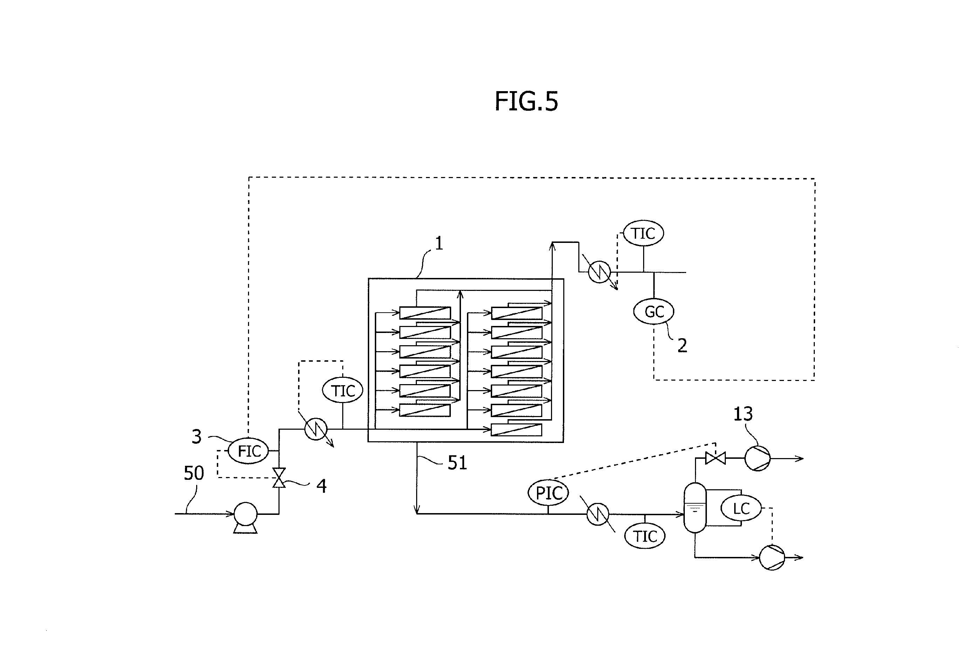

Next, Figure 5 shows one embodiment of the dehydration system in accordance with the present invention. The dehydration system shown in Figure 5 includes a dehydrating apparatus 1, a concentration measuring device 2 for measuring the concentration of anhydride or water contained in a liquid to be dehydrated, a flow regulator 3, a heat exchanger, and a pressure reducing device 13 as major components. The concentration measuring device 2 for measuring the concentration of anhydride or water is provided downstream of the dehydrating apparatus 1. The flow regulator 3 is provided upstream of the dehydrating apparatus 1. The concentration measuring device 2 and the flow regulator 3 are connected to each other. The heat exchanger is provided at the middle of the dehydrating apparatus 1 and the flow regulator 3. The pressure reducing device 13 is connected to the dehydrating apparatus 1.

Any dehydrating apparatus 1 exemplified in the embodiments shown in Figures 1 to 4 can be used in the present system, and each dehydrating apparatus may have the same configuration and operation. The dehydrating apparatus 1 shown in Figure 5 is a schematic view, in which the direction of liquid flow, the installation positions of a plurality of water separation membrane modules, and the positions of the liquid inlet and liquid outlet are not shown exactly.
The concentration measuring device 2 measures the concentration of anhydride or water in the liquid 50 recovered from the dehydrating apparatus 1 to evaluate the effect of dehydration effect. Specifically, a gas chromatograph, a densitometer, or the like can be used. A measuring device capable of making online measurement is preferable.
The flow regulator 3 regulates the quantity of the liquid 50 fed to the dehydrating apparatus 1. As the flow regulator 3, a flow regulator capable of controlling a valve 4 so as to increase or decrease the quantity of the liquid 50 fed to the dehydrating apparatus 1 in response to the concentration information sent from the concentration measuring device 2 can be used.

An embodiment of a method for dehydrating a liquid, which is a mixture of ethanol and water, by using the dehydration system of the above-described embodiment is explained.
As shown in Figure 5, 95wt% ethanol is heated by the heat exchanger, and is fed into the dehydrating apparatus 1. In the dehydrating apparatus 1, water is removed from the liquid 50, and the liquid having increased ethanol concentration is recovered. The gas chromatograph, which is the concentration measuring device 2 for measuring the concentration of anhydride or water, provided downstream of the dehydrating apparatus 1 measures the concentration of ethanol contained in the recovered liquid 50. The measurement of ethanol concentration is made online at all times. The gas chromatograph sends the measurement result to the flow regulator 3 connected to the gas chromatograph. The flow regulator 3 regulates the quantity of the liquid 50 fed to the dehydrating apparatus 1 in response to the measurement result of ethanol concentration. Specifically, when the ethanol concentration is low, the quantity of the liquid 50 supplied to the dehydrating apparatus 1 is decreased. By the regulation, the ethanol concentration at the outlet of the dehydrating apparatus 1 is monitored, and is fed back to the flow regulator 3, by which a system capable of obtaining ethanol of stable quality can be achieved.

As a modification of the embodiment shown in Figure 5, a dehydration system that includes the concentration measuring device 2 and does not include a flow regulator can also be used. In the modified embodiment, the liquid concentration measuring device 2 such as a gas chromatograph, can merely monitor the concentration of the recovered ethanol, and in some cases, can act as a barometer of the replacement time of the water separation membrane, for example.

According to the embodiment shown in Figure 5 and the modification thereof, by providing the concentration measuring device 2, the concentration of anhydride, such as ethanol. or water at the outlet of the dehydrating apparatus 1 can be detected, so that a stable dehydration system can be provided.

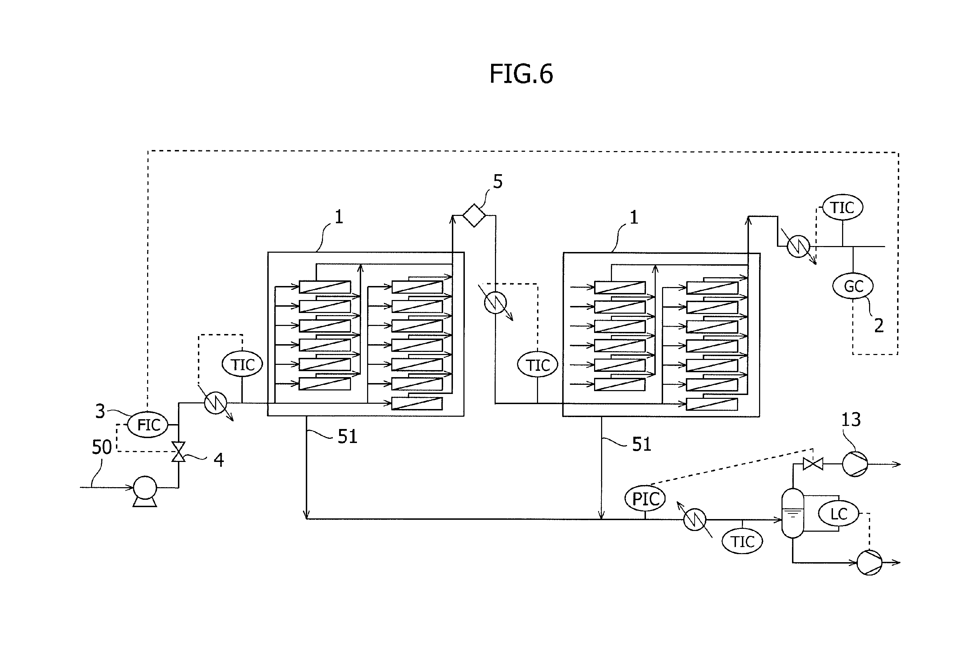

Figure 6 shows another embodiment of the dehydration system in accordance with the present invention.
The dehydration system shown in Figure 6 includes a first dehydrating apparatus 1, a second dehydrating apparatus 1, and a mixer 5 as major components. The adjacent two dehydrating apparatuses 1 are connected in series by a pipe. The mixer 5 is provided downstream of the first dehydrating apparatus and upstream of the second dehydrating apparatus.

Any dehydrating apparatus 1 exemplified in the embodiments shown in Figures 1 to 4 can be used in the present system, and each dehydrating apparatus may have the same configuration and operation. In particular, in the dehydration system shown in Figure 6, the first dehydrating apparatus 1 has a configuration such that a plurality of water separation membrane modules 10 are provided in parallel in the apparatus body.
The mixer 5 is used to mix the dehydrated liquid that is recovered from the first dehydrating apparatus 1. As the mixer 5, for example, a blade-type mixer provided in the pipe can be used.

An embodiment of a method for dehydrating a mixture of ethanol and water by using the dehydration system of the above-described embodiment is explained.
As shown in Figure 6, the liquid 50 containing 95wt% ethanol is heated by the heat exchanger, and is fed to the first dehydrating apparatus 1. In the first dehydrating apparatus 1, water is removed from the liquid 50 as a water vapor 51 by the water separation membrane modules. The liquid 50 having increased ethanol concentration is recovered. In some cases, the liquid 50 recovered from each of the modules has a different ethanol concentration depending on the individual ditterences between the water separation membrane modules. Then, the liquid 50 from each of the modules is collected at one pipe and is fed to the mixer 5. In the mixer 5, the collected liquid 50 is mixed sufficiently so that the concentration becomes uniform, and then this is fed to the second dehydrating apparatus 1. In the second dehydrating apparatus 1, water is further removed from the liquid 50 as the water vapor 51, and the dehydrated ethanol with a higher purity is recovered.

As a modification of the above-described embodiment, a dehydration system in which three or more dehydrating apparatuses 1 are connected in series may also be used. In this case as well, likewise, mixers are provided upstream of the second and subsequent dehydrating apparatuses. Also, the dehydration system of the present embodiment may be a system that does not include the concentration measuring device 2 or the flow regulator 3. The dehydration system of the present embodiment may use a dehydrating apparatus in which inert gas is supplied to the shell as explained by that shown in Figure 2 in place of the dehydrating apparatus 1 which is connected with the pressure reducing device.

According to the embodiment shown in Figure 6 and the modification thereof, by providing the mixer 5, the liquid 50 can be fed to the next dehydrating apparatus 1 after the variations in concentration of anhydride in the liquid 50 recovered from the water separation membrane module, which may be generated in the dehydrating apparatus 1 provided with the plurality of water separation membrane modules, are eliminated, and the recovered liquid 50 is made uniform. Without the mixing by the mixer, the dehydration in the first dehydrating apparatus may become useless. For example, in the case in which the recovered liquid from some water separation membrane modules achieve an anhydride concentration of 99.9% which is over the target concentration, and the recovered liquid from other water separation membrane modules achieve an anhydride concentration of 97.0% which is below the target concentration, if the mixer 5 is absent, the liquid 50 having different concentrations is fed to the second dehydrating apparatus as they are. At this time, even if the liquid having an anhydride concentration of 99.9% were fed to the second dehydrating apparatus and the dehydration procedure were further conducted, further dehydration effect may not be achieved, and the procedure would be useless. On the other hand, even if the liquid having an anhydride concentration of 97.0% were fed to the second dehydrating apparatus and dehydration procedure were further conducted, the target concentration cannot be reached, and in some cases, the finally obtained anhydride concentration does not reach the target concentration. In contrast, in the case in which the anhydride concentration in the liquid 50 from each of the water separation membrane modules made uniform by the mixer 5, and this liquid 50 is fed to the second dehydrating apparatus 1, at least a useless procedure is not preformed, and the dehydration effect in the first dehydrating apparatus 1 is put to good use in the subsequent dehydrating apparatus 1. Thus, by providing the mixer 5, the dehydration effect in one dehydrating apparatus 1 can be reliably reflected in the subsequent dehydrating apparatus, and the dehydration system can be stabilized overall.

## Claims

1. A dehydrating apparatus (1, 101, 201, 301, 401) **characterized in that** it comprises, in a dehydrating apparatus body,
a water separation membrane module (10, 110, 210, 310, 410, 510) in which a water separation membrane (10d, 110d, 210d, 310d, 410d, 510d) having at least one flow path (10c, 110c, 210c, 310c, 410c, 510c) extending in the up and down direction to cause a liquid to pass through is provided with a liquid inlet (10a, 110a, 210a, 310a, 410a, 510a) at the bottom thereof and a liquid outlet (10b, 110b, 210b, 310b, 410b, 510b) at the top thereof; and
a shell (11) defined by the outer surface of the water separation membrane module and the inner wall of the dehydrating apparatus body, wherein a heater (12) is provided in the shell (11) near the liquid outlet, and a connection port for connection with a pressure reducing device (13) is provided in the shell (11) near the liquid inlet; and
as a liquid (50) rises in the water separation membrane, water in the liquid permeates the water separation membrane and moves into the shell (11), by which the liquid is dehydrated.
wherein at least two water separation membrane modules (10, 110, 210, 310, 410, 510) are arranged in parallel in the dehydrating apparatus body, and the liquid outlet (10b, 110b, 210b, 310b, 410b, 510b) of one water separation membrane module is connected to the liquid inlet (10a, 110, 210a, 310a, 410a, 510a) of another water separation membrane module (10, 110, 210, 310, 410, 510) in series.

2. The dehydrating apparatus (101) according to claim 1, further comprising an inert gas inlet (15) provided in the shell (11) near the liquid outlet (10b).

3. A dehydrating apparatus (101) **characterized in that** it comprises, in a dehydrating apparatus body,
a water separation membrane module (10) in which a water separation membrane (10d) having at least one flow path (10c) extending in the up and down direction to cause a liquid (50) to pass through is provided with a liquid inlet (10a) at the bottom thereof and a liquid outlet (10b) at the top thereof; and
a shell (11) defined by the outer surface of the water separation membrane module (10) and the inner wall of the dehydrating apparatus body, wherein an inert gas inlet (15) is provided in the shell (11) near the liquid outlet (10b), and an inert gas outlet is provided in the shell (11) near the liquid inlet (10a)
wherein at least two water separation membrane modules (10) are arranged in parallel in the dehydrating apparatus body, and the liquid outlet (10b) of one water separation membrane module is connected to the liquid inlet (10a) of another water separation membrane module (10) in series.

4. A dehydrating apparatus (401) **characterized in that** it comprises, in a dehydrating apparatus body,
a water separation membrane module (10, 310, 410, 510) in which a water separation membrane (10d, 310d, 410d, 510d) having at least one flow path (10e, 310c, 410c, 510c) extending in the up and down direction to cause a liquid (50) to pass through is provided with a liquid inlet (10a, 310a, 410a, 510a) at the bottom thereof and a liquid outlet (10b, 310b, 410b, 510b) at the top thereof; and
a shell (11) defined by the outer surface of the water separation membrane module and the inner wall of the dehydrating apparatus body, wherein at least one heater (20) is provided within the water separation membrane (10d, 310d, 410d, 510d), and a connection port for connection with a pressure reducing device (13) is provided in the shell (11) near the liquid inlet; and
as the liquid (50) rises in the water separation membrane, water in the liquid permeates the water separation membrane and moves into the shell (11), by which the liquid is dehydrated
wherein at least two water separation membrane modules (10, 310, 410, 510) are arranged in parallel in the dehydrating apparatus body, and the liquid outlet (10b, 310b, 410b. 510b) of one water separation membrane module is connected to the liquid inlet (10a, 310a, 410a, 510a) of another water separation membrane module (10, 310, 410, 510) in series.

5. A dehydrating apparatus **characterized in that** it comprises, in a dehydrating apparatus body,
a water separation membrane module (10, 310, 410, 510) in which a water separation membrane (10d, 310d, 410d, 510d) having at least one flow path (10c, 310c, 410c, 510c) extending in the up and down direction to cause a liquid to pass through is provided with a liquid inlet (10a, 310a, 410a, 510a) at the bottom thereof and a liquid outlet (10b, 310b, 410b, 510b) at the top thereof; and
a shell (11) defined by the outer surface of the water separation membrane module and the inner wall of the dehydrating apparatus body, wherein at least one heater (20) is provided within the water separation membrane, an inert gas inlet (15) is provided in the shell (11) near the liquid outlet, and an inert gas outlet is provided in the shell (11) near the liquid inlet;
wherein at least two water separation membrane modules (10, 310, 410, 510) are arranged in parallel in the dehydrating apparatus body, and the liquid outlet (10b, 310b, 410b, 510b) of one water separation membrane module is connected to the liquid inlet (10a. 310a, 410a, 510a) of another water separation membrane module (10, 310, 410, 510) in series.

6. The dehydrating apparatus according to claim 4 or 5, further comprising a heater (12) provided in the shell (11) near the liquid outlet.

7. The dehydrating apparatus according to any one of claims 1 to 6, further comprising a baffleplate (18) provided in the shell (11).

8. A dehydration system **characterized in that** it comprises:
the dehydrating apparatus (1, 101, 201, 301, 401) according to any one of claims 1 to 7;
a liquid heater (12) provided upstream of the dehydrating apparatus; and
a pressure reducing means (13) connected as necessary to the shell (11) near the liquid outlet (10b, 110b, 210b, 310b, 410b, 510b) of the dehydrating apparatus (1, 101, 201, 301, 401).

9. The dehydration system according to claim 8, further comprising a liquid concentration measuring device (2) provided downstream of the dehydrating apparatus (1, 101, 201, 301, 401).

10. The dehydration system according to claim 9, further comprising a liquid flow regulator (3) which is provided upstream of the dehydrating apparatus (1, 101, 201, 301, 401), and is connected to the liquid concentration measuring device (2).

11. The dehydration system according to any one of claims 9 or 10,
wherein the dehydrating apparatus (1) comprises at least two water separation membrane modules (10) connected in parallel;
at least two dehydrating apparatuses (1) are connected in series; and
a mixer (5) for mixing a liquid recovered by the dehydrating apparatus is provided in a pipe connecting the two dehydrating apparatuses connected in series.

12. A dehydration system **characterized in that** it comprises:
a dehydrating apparatus comprising, in a dehydrating apparatus body,
a water separation membrane module (10, 110, 210, 310, 410, 510) in which a water separation membrane (10d, 110d, 210d, 310d, 410d, 510d) having at least one flow path (10c, 110c, 210c, 310c, 410c, 510c) extending in the up and down direction to cause a liquid to pass through is provided with a liquid inlet (10a, 110a, 210a, 310a, 410a, 510a) at the bottom thereof and a liquid outlet (10b, 110b, 210b, 310b, 410b, 510b) at the top thereof; and
a shell (11) defined by the outer surface of the water separation membrane module and the inner wall of the dehydrating apparatus body, wherein a heater (12) is provided in the shell (11) near the liquid outlet, and a connection port for connection with a pressure reducing device (13) is provided in the shell (11) near the liquid inlet; and
as the liquid (50) rises in the water separation membrane, water in the liquid permeates the water separation membrane and moves into the shell (11), by which the liquid is dehydrated;
a liquid heater (12) provided upstream of the dehydrating apparatus; and
a pressure reducing means (13) connected as necessary to the shell (11) near the liquid outlet (10b, 110b, 210b, 310b, 410b, 510b) of the dehydrating apparatus (1, 101, 201, 301, 401),
wherein the dehydrating apparatus comprises at least two water separation membrane modules (10) connected in parallel; at least two dehydrating apparatuses (1) are connected in series; and a mixer (5) for mixing a liquid recovered by the dehydrating apparatus is provided in a pipe connecting the two dehydrating apparatuses connected in series.

13. The dehydration system (101) according to claim 12, wherein the dehydrating apparatus comprises an inert gas inlet (15) provided in the shell (11) near the liquid outlet (10b).

14. A dehydration system **characterized in that** it comprises:
A dehydrating apparatus comprising, in a dehydrating apparatus body,
a water separation membrane module (10) in which a water separation membrane (10d) having at least one flow path (10c) extending in the up and down direction to cause a liquid (50) to pass through is provided with a liquid inlet (10a) at the bottom thereof and a liquid outlet (10b) at the top thereof; and
a shell (11) defined by the outer surface of the water separation membrane module (10) and the inner wall of the dehydrating apparatus body, wherein an inert gas inlet (15) is provided in the shell (11) near the liquid outlet (10b), and an inert gas outlet is provided in the shell (11) near the liquid inlet (10a);
a liquid heater (12) provided upstream of the dehydrating apparatus; and
a pressure reducing means (13) connected as necessary to the shell (11) near the liquid outlet (10b) of the dehydrating apparatus,
wherein the dehydrating apparatus comprises at least two water separation membrane modules (10) connected in parallel; at least two dehydrating apparatuses (1) are connected in series; and a mixer (5) for mixing a liquid recovered by the dehydrating apparatus is provided in a pipe connecting the two dehydrating apparatuses connected in series.

15. A dehydration system **characterized in that** it comprises:
A dehydrating apparatus (401) comprising, in a dehydrating apparatus body,
a water separation membrane module (10, 310, 410, 510) in which a water separation membrane (10d, 310d, 410d, 510d) having at least one flow path (10c, 310c, 410c, 510c) extending in the up and down direction to cause a liquid (50) to pass through is provided with a liquid inlet (10a, 310a. 410a, 510a) at the bottom thereof and a liquid outlet (10b, 310b, 410b, 510b) at the top thereof, wherein at least one heater (20) is provided within the water separation membrane; and
a shell (11) defined by the outer surface of the water separation membrane module and the inner wall of the dehydrating apparatus body, and a connection port for connection with a pressure reducing device is provided in the shell near the liquid inlet; and
a liquid heater (12) provided upstream of the dehydrating apparatus; and
a pressure reducing means (13) connected as necessary to the shell (11) near the liquid outlet (10b) of the dehydrating apparatus,
wherein the dehydrating apparatus comprises at least two water separation membrane modules (10) connected in parallel; at least two dehydrating apparatuses (1) are connected in series; and a mixer (5) for mixing a liquid recovered by the dehydrating apparatus is provided in a pipe connecting the two dehydrating apparatuses connected in series.

16. A dehydration system **characterized in that** it comprises:
A dehydrating apparatus comprising, in a dehydrating apparatus body,
a water separation membrane module (10, 310, 410, 510) in which a water separation membrane (10d 310d, 410d, 510d) having at least one flow path (10e, 310c, 410c, 510c) extending in the up and down direction to cause a liquid (50) to pass through is provided with a liquid inlet (10a, 310a, 410a, 510a) at the bottom thereof and a liquid outlet (10b, 310b, 410b, 510b) at the top thereof wherein at least one heater is provided within the water separation membrane; and
a shell (11) defined by the outer surface of the water separation membrane module and the inner wall of the dehydrating apparatus body, wherein an inert gas inlet (15) is provided in the shell (11) near the liquid outlet (10b), and an inert gas outlet is provided in the shell (11) near the liquid inlet (10a):
a liquid heater (12) provided upstream of the dehydrating apparatus; and
a pressure reducing means (13) connected as necessary to the shell (11) near the liquid outlet (10b) of the dehydrating apparatus,
wherein the dehydrating apparatus comprises at least two water separation membrane modules (10) connected in parallel; at least two dehydrating apparatuses (1) are connected in series; and a mixer (5) for mixing a liquid recovered by the dehydrating apparatus is provided in a pipe connecting the two dehydrating apparatuses connected in series.

17. The dehydration system according to claim 15 or 16, wherein the dehydrating apparatus further comprises a heater (12) provided in the shell (11) near the liquid outlet.

18. The dehydration system according to any one of claims 12 to 17, wherein the dehydrating apparatus further comprises a baffleplate (18) provided in the shell (11).

19. The dehydration system according to any one of claim 12 to 18, further comprising a liquid concentration measuring device (2) provided downstream of the dehydrating apparatus (1, 101, 201, 301, 401).

20. The dehydration system according to claim 19, further comprising a liquid flow regulator (3) which is provided upstream of the dehydrating apparatus (1, 101, 201, 301, 401), and is connected to the liquid concentration measuring device (2).
